# EUROPEAN PATENT APPLICATION

(11) **EP 4 116 594 A1**
(43) Date of publication of application: **11.01.2023**
(21) Application number: 21765329.4
(22) Date of filing: 03.03.2021
(51) Int. Cl.: F16C 19/26, F16C 33/46

(54) **RETAINER FOR RADIAL ROLLER BEARING, AND RADIAL ROLLER BEARING**

(30) Priority: 04.03.2020 JP 2020036586
(71) Applicant: NSK Ltd., Tokyo 141-8560 (JP)
(72) Inventor: KUMAGAI, Hirofumi, Takasaki-shi, Gunma 370-3344 (JP)
(74) Representative: Grünecker Patent- und Rechtsanwälte PartG mbB
(86) International application number: PCT/JP2021/008252
(87) International publication number: WO 2021/177369

(57) **Abstract**

This retainer for a radial roller bearing has a pair of annular rim portions and a plurality of column portions that connect together the rim portions, which are concentrically disposed, and that are provided in the circumferential direction with a prescribed gap therebetween. A plurality of pockets for retaining a plurality of rollers in a manner enabling rolling are formed by the pair of rim portions and the mutually adjacent column portions. The column portions each have, on opposing sides in the circumferential direction, a retaining surface for retaining a roller. On one of the retaining surfaces, an outer diameter-side drop-preventing tab and an inner diameter-side drop-preventing tab are formed. On the other retaining surface, no protrusions are formed that protrude toward the pocket on the outer diameter side and the inner diameter side.

## Description

### TECHNICAL FIELD

The present invention relates to a radial roller bearing retainer mounted on a transmission gear support portion, a shaft support portion, and the like of a vehicle, and a radial roller bearing including the radial roller bearing retainer.

### BACKGROUND ART

Recently, a cage and roller and a radial roller bearing are often used in a rotating portion of a transmission or the like for various industrial machines or an automobile. For example, with an increase in an output and an increase in a speed of the automobile, the radial roller bearing used in the transmission is often used under a high speed rotation condition and a low viscosity lubricant condition, and thus a bearing specification which can be used under a severe lubrication condition is required.

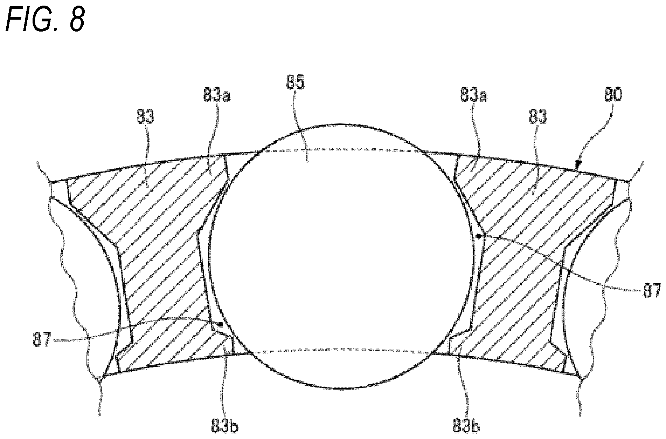

For example, as illustrated in Fig. 8, a radial roller bearing retainer 80 in the related art includes a pair of rim portions (not illustrated), and a plurality of column portions 83 which connect the pair of rim portions and are arranged at a predetermined interval in a circumferential direction. Rollers 85 are held by pockets which are formed by the rim portions and the column portions 83.

Further, each of the column portions 83 of the retainer 80 illustrated in Fig. 8 includes, on an outer diameter surface side and an inner diameter surface side of the retainer 80, drop prevention claws 83a and 83b which protrude toward the pockets, and the drop prevention claws 83a and 83b can prevent the rollers 85 from dropping out from the retainer 80.

However, in the radial roller bearing retainer 80 illustrated in Fig. 8, a gap portion 87 is formed between the roller 85 and the column portion 83, and a lubricating oil easily stagnates in the gap portion 87. As a result, it is difficult for the lubricating oil to flow from an outer peripheral surface side to an inner peripheral surface side or from the inner peripheral surface side to the outer peripheral surface side of the retainer 80, and lubrication performance may decrease.

Therefore, Patent Literature 1 discloses a radial needle bearing which can improve lubrication performance when high speed rotation is performed and a low viscosity lubricant is used, and can eliminate poor lubrication. In the radial needle bearing described in Patent Literature 1, a retainer, which holds rollers, is disposed between a shaft which is an inner member and an outer ring which is an outer member. An outer peripheral surface of each of column portions of the above retainer has a shape which does not come into contact with a raceway surface (inner peripheral surface) of the outer ring, and the outer peripheral surface of the column portion is formed with a groove which extends in an axial direction. With such a configuration, it is possible to prevent the outer peripheral surface of the column portion from coming into contact with the inner peripheral surface of the outer ring and scraping off the lubricant on the inner peripheral surface of the outer ring, and it is possible to reduce a possibility of occurrence of the poor lubrication. Further, as the radial needle bearing rotates, the lubricant accumulated in the groove is supplied by being splashed onto the raceway surface of the outer ring due to a centrifugal force, and thus the lubrication performance is further improved.

Further, as a further improvement of the radial needle bearing described in Patent Literature 1, Patent Literature 2 discloses a cage and roller capable of exhibiting sufficient lubrication performance even when high speed rotation is performed or low viscosity lubricating is used. A lubrication hole is formed in each of column portions of the above cage and roller so as to penetrate through the column portion in a radial direction, and a lubricant easily enters from an outer peripheral side to an inner peripheral side, or from the inner peripheral side to the outer peripheral side.

### CITATION LIST

### PATENT LITERATURE

Patent Literature 1: JP-A-2006-283933
Patent Literature 2: Japanese Patent No. 5572952

### SUMMARY OF INVENTION

### TECHNICAL PROBLEM

However, in the radial needle bearing described in Patent Literature 1, the lubricant accumulated in the groove of the column portion can be positively supplied to the inner peripheral surface of the outer ring by the centrifugal force, but the lubricant cannot be sufficiently supplied from an outer ring side to a shaft side.

Further, in the cage and roller described in Patent Literature 2, the lubrication hole is formed so as to penetrate through the column portion in the radial direction. Therefore, it is necessary to design a large width of the column portion in a circumferential direction, and as a result, the number of rollers decreases, and a load capacity is lowered.

The present invention has been made in view of the above problems, and an object of the present invention is to provide a radial bearing retainer which can improve penetrability of a lubricating oil between an outer peripheral surface side and an inner peripheral surface side of the retainer and improve lubrication performance without lowering a load capacity.

### SOLUTION TO PROBLEM

The above object of the present invention is achieved by the following configuration.

A radial roller bearing retainer includes:
a pair of rim portions which are annular;
a plurality of column portions which connect the pair of rim portions and are provided at a predetermined interval in a circumferential direction; and
a plurality of pockets which are formed by the column portions adjacent to each other and the pair of rim portions so as to rollably hold a roller, in which:
   the column portions include, on both sides in the circumferential direction, holding surfaces which hold the roller;
   among the holding surfaces located on both sides of each of the pockets in the circumferential direction, one holding surface is formed with an outer diameter side drop prevention claw which protrudes toward the pocket on an outer diameter side to prevent the roller from dropping out, and an inner diameter side drop prevention claw which protrudes toward the pocket on an inner diameter side to prevent the roller from dropping out; and
   among the holding surfaces located on the both sides of each of the pockets in the circumferential direction, the other holding surface does not include protrusions which protrude toward the pocket on the outer diameter side and the inner diameter side in a region of at least a part of the other holding surface.

### ADVANTAGEOUS EFFECTS OF INVENTION

According to the present invention, a part of holding surfaces which hold rollers is formed with drop prevention claws, and the other portion is not formed with protrusions which protrude toward a pocket. Therefore, penetrability of a lubricating oil between an outer peripheral surface side and an inner peripheral surface side of a retainer can be improved and lubrication performance can be improved without lowering a load capacity.

### BRIEF DESCRIPTION OF DRAWINGS

Fig. 1 is a perspective view illustrating a radial roller bearing retainer according to an embodiment of the present invention.
Fig. 2 is a cross-sectional view illustrating the radial roller bearing retainer and rollers according to the first embodiment of the present invention.
Fig. 3 is a cross-sectional view illustrating a radial roller bearing retainer and rollers according to a second embodiment of the present invention.
Fig. 4 is a cross-sectional view illustrating a radial roller bearing retainer and rollers according to a third embodiment of the present invention.
Fig. 5 is a cross-sectional view illustrating a radial roller bearing retainer and rollers according to a fourth embodiment of the present invention.
Fig. 6 is an enlarged development view of a part of a radial roller bearing retainer according to a fifth embodiment of the present invention.
Fig. 7 is an enlarged development view of a part of a radial roller bearing retainer according to a sixth embodiment of the present invention.
Fig. 8 is a cross-sectional view illustrating a radial roller bearing retainer and rollers in the related art.

### DESCRIPTION OF EMBODIMENTS

Hereinafter, a radial roller bearing retainer according to the present invention will be described in detail with reference to the drawings. The present invention is not limited to embodiments described below, and can be appropriately modified without departing from the gist of the present invention.

### (First Embodiment)

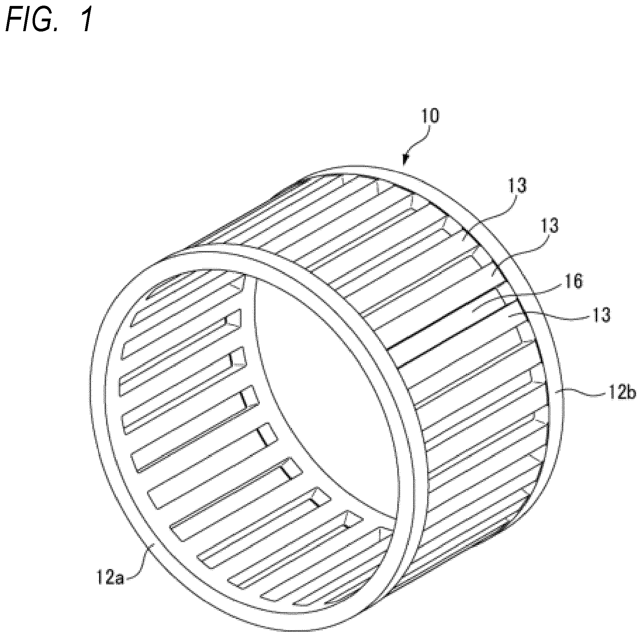

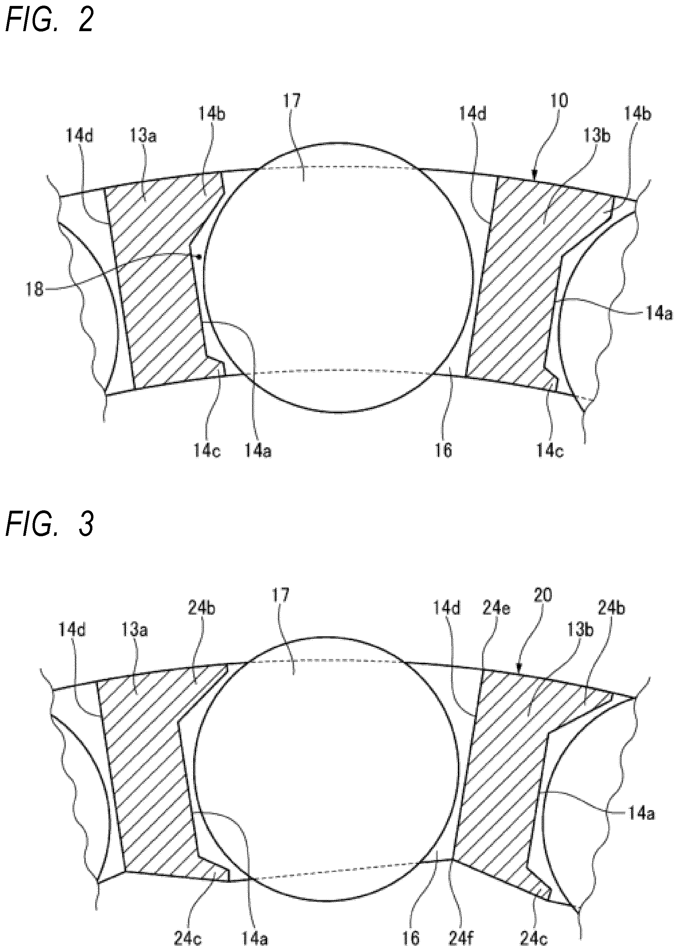

First, a radial roller bearing retainer 10 according to a first embodiment of the present invention will be described with reference to Figs. 1 and 2.

The radial roller bearing retainer 10 according to the present embodiment is made of a resin, and as illustrated in Figs. 1 and 2, includes a pair of rim portions 12a and 12b which are annular, and a plurality of column portions 13 which connect the rim portions 12a and 12b disposed concentrically and are provided at a predetermined interval in a circumferential direction. The radial roller bearing retainer 10 is formed in a cylindrical shape. A plurality of pockets 16 in which a plurality of rollers 17 are rollably held are each formed by the column portions 13 adjacent to each other and the pair of rim portions 12a and 12b. Further, the rollers 17 are cylindrical rollers, and may also be rod-shaped rollers or needle rollers. A radial roller bearing serving as a so-called cage and roller includes the above radial roller bearing retainer 10 (hereafter, also simply referred to as the "retainer") and the plurality of rollers 17 held in the pockets 16. In the following description, unless otherwise stated, an axial direction, the circumferential direction, an outer diameter side, and an inner diameter side indicate an axial direction, a circumferential direction, an outer diameter side, and an inner diameter side of the retainer formed in the cylindrical shape, respectively. An outer diameter side drop prevention claw 14b and an inner diameter side drop prevention claw 14c to be described later are not illustrated in Fig. 1.

Each of the column portions 13 (column portions 13a and 13b) includes, on both sides in the circumferential direction, holding surfaces 14a and 14d which each hold the roller 17. On the outer diameter side of the holding surface 14a of one column portion among the column portions 13a and 13b located on both sides of the pocket 16, that is, both sides (both sides in a roller arrangement direction) of the roller 17, the outer diameter side drop prevention claw 14b which protrudes toward the pocket 16 is formed over an entire region of the column portion in the axial direction. Further, on the inner diameter side of the holding surface 14a, the inner diameter side drop prevention claw 14c which protrudes toward the pocket 16 is also formed over an entire region of the column portion in the axial direction.

On the other hand, the holding surface 14d of the other column portion 13b among the column portions 13a and 13b located on the both sides of the roller 17 is planar over an entire region, and is not formed with protrusions (drop prevention claws) which protrude toward the pocket 16 on the outer diameter side and the inner diameter side.

That is, all of the column portions 13 (column portions 13a and 13b) constituting the retainer 10 have the same cross-sectional shape, and for each of the column portions 13a and 13b, one holding surface 14a is formed with the outer diameter side drop prevention claw 14b and the inner diameter side drop prevention claw 14c, and the other holding surface 14d is not formed with the protrusions.

Further, a portion of the holding surface 14a where the outer diameter side drop prevention claw 14b and the inner diameter side drop prevention claw 14c are not formed is planar, and a distance, in the circumferential direction, between the planar portion and the other holding surface 14d increases toward the outer diameter side. The above planar portion of the one holding surface 14a and the other holding surface 14d may also be configured to be parallel to each other.

According to the radial roller bearing retainer 10 according to the present embodiment configured as described above, the outer diameter side drop prevention claw 14b can prevent the roller 17 from dropping out toward an outer peripheral surface side of the retainer 10, and the inner diameter side drop prevention claw 14c can prevent the roller 17 from dropping out toward an inner peripheral surface side of the retainer 10.

Further, a gap portion 18 is formed between the roller 17 and the one holding surface 14a, and a lubricating oil may stagnate in the gap portion 18, but no gap portion in which the lubricating oil stagnates is formed between the roller 17 and the other holding surface 14d. Further, the other holding surface 14d is formed to be planar over the entire region, and thus the lubricating oil can easily move along the other holding surface 14d (no protrusions are present which protrude toward the pocket and hinder movement of the lubricating oil in a radial direction).

Therefore, penetrability of the lubricating oil between the outer peripheral surface side and the inner peripheral surface side of the retainer 10 is improved, and lubrication performance of the radial roller bearing can be improved by the retainer 10 without lowering a load capacity.

In the above first embodiment, the outer diameter side drop prevention claw 14b and the inner diameter side drop prevention claw 14c are each formed over the entire region of the holding surface 14a in the axial direction, but each of the drop prevention claws 14b and 14c are not necessarily formed in the entire region of the holding surface 14a in the axial direction. For example, when the outer diameter side drop prevention claw 14b and the inner diameter side drop prevention claw 14c are formed only in a region of a part of the one holding surface 14a in the circumferential direction with the roller 17 as a reference, it suffices that a region where the protrusions protruding toward the pocket 16 are not formed is present on the holding surface 14d at positions facing the outer diameter side drop prevention claw 14b and the inner diameter side drop prevention claw 14c.

### (Second Embodiment)

Next, a radial roller bearing retainer 20 according to a second embodiment of the present invention will be described with reference to Fig. 3. In the second embodiment and subsequent third to sixth embodiments, the same components as those of the first embodiment are denoted by the same reference numerals or equivalent reference numerals, and descriptions thereof are omitted.

In the second embodiment, similarly to the first embodiment, an outer diameter side drop prevention claw 24b and an inner diameter side drop prevention claw 24c which protrude toward the pocket 16 are respectively formed on the outer diameter side and the inner diameter side of the one holding surface 14a among the holding surfaces 14a and 14d disposed on the both sides of the roller 17. However, the outer diameter side drop prevention claw 24b and the inner diameter side drop prevention claw 24c are formed to be respectively longer than the outer diameter side drop prevention claw 14b and the inner diameter side drop prevention claw 14c in the first embodiment.

Specifically, in the second embodiment, a distance between a tip end of the outer diameter side drop prevention claw 24b protruding from the holding surface 14a and an outer diameter side end portion 24e of the holding surface 14d is set to be smaller than a diameter of the roller 17. Similarly, a distance between a tip end of the inner diameter side drop prevention claw 24c protruding from the holding surface 14a and an inner diameter side end portion 24f of the holding surface 14d is set to be smaller than the diameter of the roller 17.

In the first embodiment, the other holding surface 14d is planar, and thus there is a concern that the roller 17 may drop out due to a shape of the column portions 13a and 13b. In the second embodiment, the outer diameter side drop prevention claw 24b and the inner diameter side drop prevention claw 24c are formed to be longer, and the distances from the outer diameter side end portion 24e and the inner diameter side end portion 24f of the holding surface 14d become short, and thus the roller 17 can be reliably prevented from dropping out from between the outer diameter side drop prevention claw 24b and the outer diameter side end portion 24e, or between the inner diameter side drop prevention claw 24c and the inner diameter side end portion 24f.

### (Third Embodiment)

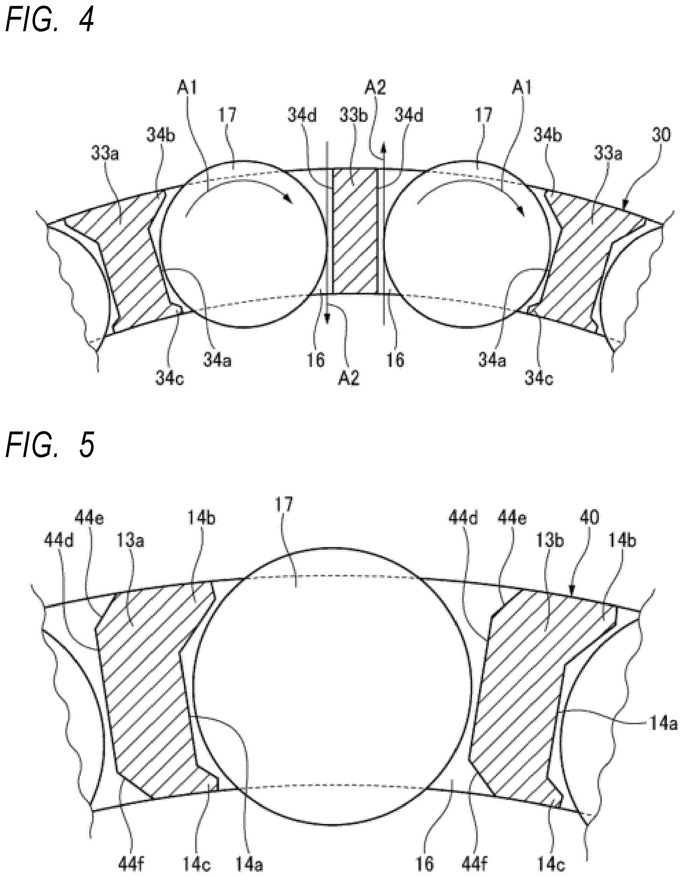

Next, a radial roller bearing retainer 30 according to a third embodiment of the present invention will be described with reference to Fig. 4.

In the third embodiment, column portions 33a and 33b having different cross-sectional shapes are alternately arranged along a circumferential direction. Specifically, each of holding surfaces 34a located on both sides of the column portion 33a in the circumferential direction is formed, over an entire region in an axial direction, with an outer diameter side drop prevention claw 34b and an inner diameter side drop prevention claw 34c. On the other hand, each of holding surfaces 34d located on both sides, in the circumferential direction, of the column portion 33b adjacent to the column portion 33a is not formed with a protrusion which protrudes toward the roller 17, and the cross-sectional shape of the column portion 33b is rectangular.

According to the third embodiment configured as described above, similarly to the first and second embodiments, one holding surface 34a among holding surfaces located on both sides of the roller 17 in the circumferential direction is formed, on an outer diameter side and an inner diameter side and over the entire region of the column portion 33a in the axial direction, with the outer diameter side drop prevention claw 34b and the inner diameter side drop prevention claw 34c. Therefore, the roller 17 can be prevented from dropping out.

Further, since no protrusions are formed over an entire region of the column portion 33b in the axial direction and on the outer diameter side and the inner diameter side of the other holding surface 34d, flow of the lubricating oil between the holding surface 34d and the roller 17 is improved, and penetrability of the lubricating oil between an outer peripheral surface side and an inner peripheral surface side of the retainer 30 is improved.

In the first and second embodiments, a direction of the radial movement of the lubricating oil caught in the roller is determined by a direction in which the roller 17 rotates, and the lubricating oil smoothly flows in one direction from an inner ring side to an outer ring side or from the outer ring side to the inner ring side. In the above third embodiment, as illustrated in Fig. 4, when the roller 17 rotates in a clockwise direction indicated by an arrow A1, the lubricating oil flows in directions indicated by arrows A2 on the both sides of the column portion 33b. Therefore, the lubricating oil smoothly flows in both directions from the inner ring side to the outer ring side and from the outer ring side to the inner ring side. The same result is obtained even when the roller 17 rotates in a counterclockwise direction, and the lubricating oil smoothly flows in the both directions from the inner ring side to the outer ring side and from the outer ring side to the inner ring side.

Thus, in the third embodiment, flow of the lubricating oil in the radial direction is not affected by a rotation direction of the roller, and an amount of the lubricating oil passing therethrough can be secured, and thus excellent lubrication performance can be stably maintained in an entire device in which a bearing is incorporated.

### (Fourth Embodiment)

Next, a radial roller bearing retainer 40 according to a fourth embodiment of the present invention will be described with reference to Fig. 5.

In the fourth embodiment, similarly to the first and second embodiments, cross-sectional shapes of the column portions 13a and 13b located on both sides of the roller 17 in a circumferential direction are the same. That is, the one holding surface 14a is formed, on an outer diameter side and an inner diameter side, with the outer diameter side drop prevention claw 14b and the inner diameter side drop prevention claw 14c which prevent the roller from dropping out, and no protrusions which protrude toward the roller 17 are formed on the outer diameter side and the inner diameter side of the other holding surface 44d.

However, only an intermediate portion of the other holding surface 44d in a radial direction is planar, and notches are provided, over an entire region of the column portion 13b in an axial direction, at an outer diameter side end portion and an inner diameter side end portion thereof. Inclined surfaces 44e and 44f, which are inclined such that the holding surface 44d has a protruded shape, are formed on the outer diameter side and the inner diameter side of the holding surface 44d.

According to the fourth embodiment configured as described above, the inclined surfaces 44e and 44f are formed on the other holding surface 44d, and thus the lubricating oil is easily drawn in between the roller 17 and the column portion 13b as compared with the first to third embodiments. Therefore, the flow of the lubricating oil is further improved, and the penetrability of the lubricating oil between an outer peripheral surface side and an inner peripheral surface side of the retainer 40 is further improved.

### (Fifth Embodiment)

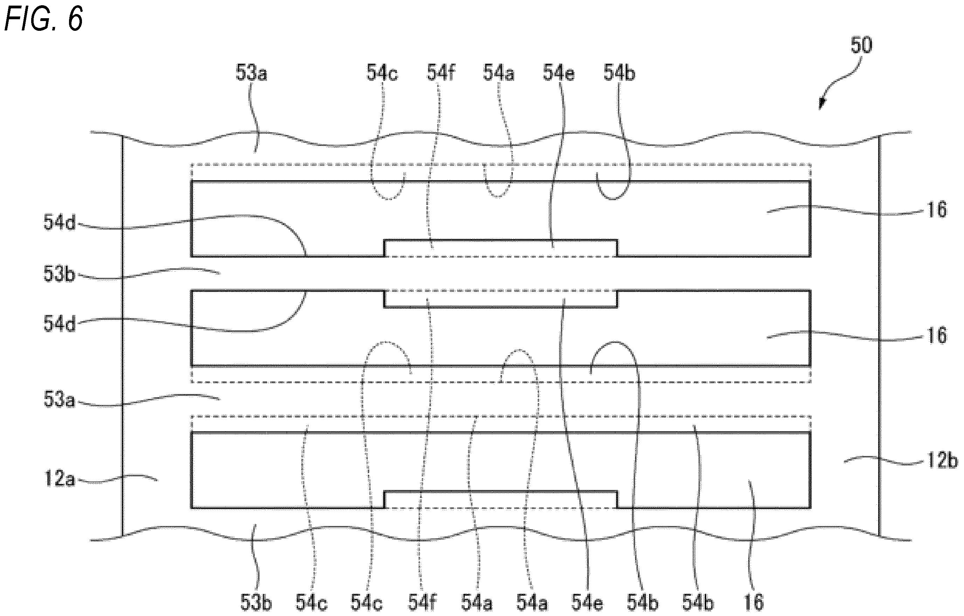

Next, a radial roller bearing retainer 50 according to a fifth embodiment of the present invention will be described with reference to Fig. 6.

In the fifth embodiment, similarly to the third embodiment, column portions 53a and 53b having different cross-sectional shapes are alternately arranged. Specifically, each of holding surfaces 54a located on both sides of the column portion 53a in a circumferential direction is formed with an outer diameter side drop prevention claw 54b and an inner diameter side drop prevention claw 54c over an entire region in an axial direction.

On the other hand, each of holding surfaces 54d located on both sides, in the circumferential direction, of the column portion 53b adjacent to the column portion 53a is formed with an outer diameter side drop prevention claw 54e and an inner diameter side drop prevention claw 54f only in a region at a center in the axial direction, the outer diameter side drop prevention claw 54e protrudes from an outer diameter side end portion toward the pocket 16, and the inner diameter side drop prevention claw 54f protrudes from an inner diameter side end portion toward the pocket 16. Further, in a region of a part (regions at both ends in the axial direction) of the holding surface 54d, no protrusions which protrude toward the pocket 16 are formed on an outer diameter side and an inner diameter side, and a cross section of the region has a rectangular shape.

According to the fifth embodiment configured as described above, in the region at the center in the axial direction, each of the holding surfaces 54a and 54d located on both sides of the pocket 16 in the circumferential direction includes a respective one of the outer diameter side drop prevention claws 54b and 54e, and a respective one of the inner diameter side drop prevention claws 54c and 54f. Therefore, as compared with the third embodiment, the roller is reliably held from the both sides in the circumferential direction, and the roller can be prevented from dropping out toward an outer peripheral surface side or an inner peripheral surface side of the retainer 50.

Further, in the regions at the both ends in the axial direction, one holding surface 54a includes the outer diameter side drop prevention claw 54b and the inner diameter side drop prevention claw 54c, and the other holding surface 54d is planar without the protrusions. Therefore, at the both ends in the axial direction, the penetrability of the lubricating oil between the outer peripheral surface side and the inner peripheral surface side of the retainer 50 is improved.

### (Sixth Embodiment)

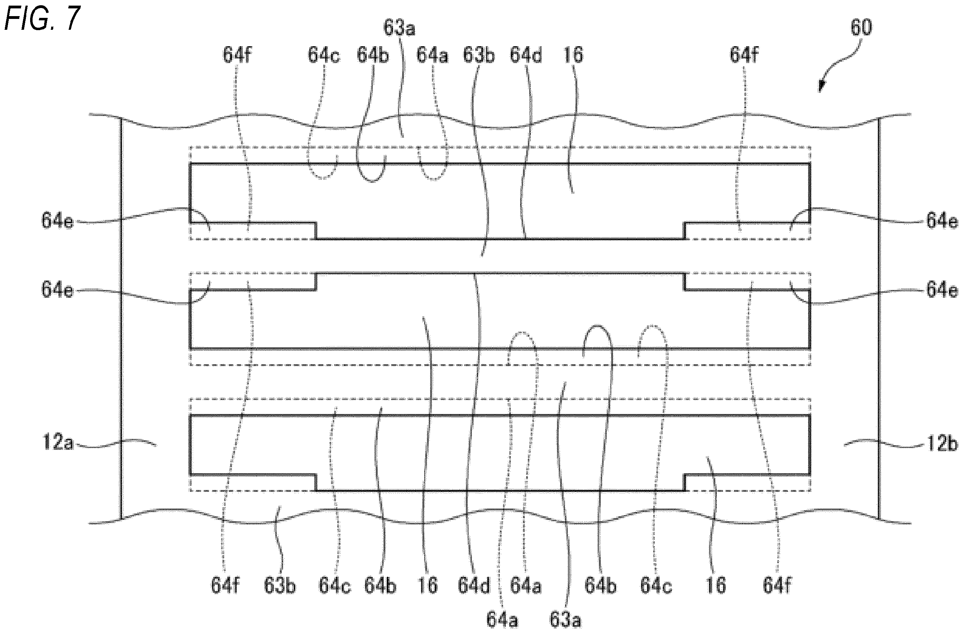

Next, a radial roller bearing retainer 60 according to a sixth embodiment of the present invention will be described with reference to Fig. 7.

In the sixth embodiment, similarly to the fifth embodiment, column portions 63a and 63b having different cross-sectional shapes are alternately arranged. Specifically, each of holding surfaces 64a located on both sides of the column portion 63a in a circumferential direction is formed with an outer diameter side drop prevention claw 64b and an inner diameter side drop prevention claw 64c over an entire region in an axial direction.

On the other hand, in the sixth embodiment, positions of outer diameter side drop prevention claws 64e and inner diameter side drop prevention claws 64f on the column portion 63b adjacent to the column portion 63a are different from those in the fifth embodiment. That is, each of holding surfaces 64d located on both sides of the column portion 63b in the circumferential direction is formed with the outer diameter side drop prevention claws 64e and the inner diameter side drop prevention claws 64f only in regions at both ends in the axial direction, the outer diameter side drop prevention claws 64e each protrude from an outer diameter side end portion toward the pocket 16, and the inner diameter side drop prevention claws 64f each protrude from an inner diameter side end portion toward the pocket 16.

Further, in a region of a part (region at a center in the axial direction) of the holding surface 64d, no protrusions which protrude toward the pocket 16 are formed on an outer diameter side and an inner diameter side, and a cross section of the region has a rectangular shape.

According to the sixth embodiment configured as described above, in the regions at the both ends in the axial direction, each of the holding surfaces 64a and 64d located on both sides of the pocket 16 in the circumferential direction includes a respective one of the outer diameter side drop prevention claws 64b and 64e, and a respective one of the inner diameter side drop prevention claws 64c and 64f. Therefore, similarly to the fifth embodiment, the roller is reliably held from both sides in the circumferential direction, and the roller can be prevented from dropping out toward an outer peripheral surface side or an inner peripheral surface side of the retainer 60. Further, in the sixth embodiment, the drop prevention claws 64b, 64c, 64e, and 64f hold, from the both sides in the circumferential direction, both ends of the roller in the axial direction, and thus a higher holding force can be obtained as compared with the fifth embodiment.

Further, in the region at the center in the axial direction, one holding surface 64a includes the outer diameter side drop prevention claw 64b and the inner diameter side drop prevention claw 64c, and the other holding surface 64d is planar without the protrusions. Therefore, at the center in the axial direction, the penetrability of the lubricating oil between the outer peripheral surface side and the inner peripheral surface side of the retainer 60 is improved.

The radial roller bearing retainer described as each of the above first to sixth embodiments can constitute the radial roller bearing by holding the rollers 17 in the pockets 16. As described above, as the rollers 17, the rod-shaped rollers and the needle rollers can also be used in addition to the cylindrical rollers.

As described above, the following matters are disclosed in the present description.
(1) A radial roller bearing retainer including:
   a pair of rim portions which are annular;
   a plurality of column portions which connect the pair of rim portions and are provided at a predetermined interval in a circumferential direction; and
   a plurality of pockets which are formed by the column portions adjacent to each other and the pair of rim portions to rollably hold a roller, in which:
      the column portions include, on both sides in the circumferential direction, holding surfaces which hold the roller;
      among the holding surfaces located on both sides of each of the pockets in the circumferential direction, one holding surface is formed with an outer diameter side drop prevention claw which protrudes toward the pocket on an outer diameter side to prevent the roller from dropping out, and an inner diameter side drop prevention claw which protrudes toward the pocket on an inner diameter side to prevent the roller from dropping out; and
      among the holding surfaces located on the both sides of each of the pockets in the circumferential direction, the other holding surface does not include protrusions which protrude toward the pocket on the outer diameter side and the inner diameter side in a region of at least a part of the other holding surface.
(2) The radial roller bearing retainer according to (1), in which:
   the outer diameter side drop prevention claw and the inner diameter side drop prevention claw are formed over an entire region of the one holding surface in an axial direction; and
   the other holding surface does not include protrusions which protrude toward the pocket in regions of the other holding surface at both ends in the axial direction.
(3) The radial roller bearing retainer according to (1), in which:
   the outer diameter side drop prevention claw and the inner diameter side drop prevention claw are formed over an entire region of the one holding surface in an axial direction; and
   the other holding surface does not include a protrusion which protrudes toward the pocket in a region of the other holding surface at a center in the axial direction.
(4) The radial roller bearing retainer according to any one of (1) to (3), in which the region of at least a part of the other holding surface is a planar surface.
(5) A radial roller bearing including a plurality of rollers and the radial roller bearing retainer according to any one of (1) to (4), in which
   a distance between a tip end of the outer diameter side drop prevention claw on the one holding surface and an outer diameter side end portion of the other holding surface, and a distance between a tip end of the inner diameter side drop prevention claw on the one holding surface and an inner diameter side end portion of the other holding surface are both smaller than a diameter of the roller.

According to this configuration, among the holding surfaces located on the both sides of the pocket in the circumferential direction, one holding surface is formed with the drop prevention claws, and the other holding surface is not formed with the protrusions which protrude toward the pocket. Therefore, the drop prevention claws can prevent the roller from dropping out. Further, in the region where the protrusions are not formed, the penetrability of the lubricating oil between an outer peripheral surface side and an inner peripheral surface side of the radial roller bearing retainer is improved.

Although the embodiments are described above with reference to the drawings, it is needless to say that the present invention is not limited to such examples. It will be apparent to those skilled in the art that various changes and modifications may be conceived within the scope of the claims. It is also understood that the various changes and modifications belong to the technical scope of the present invention. Components in the embodiments described above may be combined freely within a range not departing from the spirit of the present invention.

The present application is based on Japanese Patent Application No. 2020-36586 filed on March 4, 2020, the contents of which are incorporated herein by reference.

### REFERENCE SIGNS LIST

10, 20, 30, 40, 50, 60: radial roller bearing retainer
12a, 12b: rim portion
13, 13a, 13b, 33a, 33b, 53a, 53b, 63a, 63b: column portion
14a, 14d, 34a, 34d, 44d, 54a, 54d, 64a, 64d: holding surface
14b, 24b, 34b, 54b, 54e, 64b, 64e: outer diameter side drop prevention claw
14c, 24c, 34c, 54c, 54f, 64c, 64f: inner diameter side drop prevention claw
16: pocket
17: roller

## Claims

1. A radial roller bearing retainer comprising:
a pair of rim portions which are annular;
a plurality of column portions which connect the pair of rim portions and are provided at a predetermined interval in a circumferential direction; and
a plurality of pockets which are formed by the column portions adjacent to each other and the pair of rim portions to rollably hold a roller, wherein:
the column portions include, on both sides in the circumferential direction, holding surfaces which hold the roller;
among the holding surfaces located on both sides of each of the pockets in the circumferential direction, one holding surface is formed with an outer diameter side drop prevention claw which protrudes toward the pocket on an outer diameter side to prevent the roller from dropping out, and an inner diameter side drop prevention claw which protrudes toward the pocket on an inner diameter side to prevent the roller from dropping out; and
among the holding surfaces located on the both sides of each of the pockets in the circumferential direction, the other holding surface does not include protrusions which protrude toward the pocket on the outer diameter side and the inner diameter side in a region of at least a part of the other holding surface.

2. The radial roller bearing retainer according to claim 1, wherein:
the outer diameter side drop prevention claw and the inner diameter side drop prevention claw are formed over an entire region of the one holding surface in an axial direction; and
the other holding surface does not include protrusions which protrude toward the pockets in regions of the other holding surface at both ends in the axial direction.

3. The radial roller bearing retainer according to claim 1, wherein:
the outer diameter side drop prevention claw and the inner diameter side drop prevention claw are formed over an entire region of the one holding surface in an axial direction; and
the other holding surface does not include a protrusion which protrudes toward the pocket in a region of the other holding surface at a center in the axial direction.

4. The radial roller bearing retainer according to any one of claims 1 to 3, wherein
the region of at least a part of the other holding surface is a planar surface.

5. A radial roller bearing comprising a plurality of rollers and the radial roller bearing retainer according to any one of claims 1 to 4, wherein
a distance between a tip end of the outer diameter side drop prevention claw on the one holding surface and an outer diameter side end portion of the other holding surface, and a distance between a tip end of the inner diameter side drop prevention claw on the one holding surface and an inner diameter side end portion of the other holding surface are both smaller than a diameter of the roller.
